# FASCICULE DE BREVET EUROPEEN

(11) **EP 3 153 045 B1**
(45) Date de publication et mention de la délivrance du brevet: **07.03.2018**
(21) Numéro de dépôt: 16190911.4
(22) Date de dépôt: 27.09.2016
(51) Int. Cl.: A41D 27/08, G09F 13/22, H01F 7/02, G06F 1/16, G09F 9/37, G09F 21/02, A41D 1/00

(54) **VÊTEMENT COMPRENANT UN MODULE À AFFICHEUR ÉLECTRONIQUE AMOVIBLE, FIXÉ AU VÊTEMENT PAR DES MOYENS MAGNÉTIQUES SOUPLES**
KLEIDUNG MIT EINEM ENTFERNBAREN ELEKTRONISCHEN ANZEIGEMODUL, BEFESTIGT BEI KLEIDUNG MIT FLEXIBLEN MAGNETISCHEN MITTELN
CLOTHING COMPRISING A REMOVABLE ELECTRONIC DISPLAY MODULE, FIXED AT CLOTHING BY FLEXIBLE MAGNETIC MEANS

(30) Priorité: 08.10.2015 FR 1559557
(43) Date de publication de la demande: 12.04.2017
(73) Titulaire: PARROT SHMATES, FR-75010 Paris (FR)
(72) Inventeur: LEVY, Olivier, 75017 PARIS (FR)
(74) Mandataire: Dupuis-Latour, Dominique

(56) Documents cités:
- DE-A1- 4 408 951
- DE-A1- 10 148 821
- DE-U1- 29 915 010
- US-A1- 2003 213 045
- US-A1- 2010 315 367
- US-A1- 2014 267 940
- US-A1- 2014 320 247

## Description

L'invention concerne la fixation d'un module électronique sur un support en nappe souple, notamment un support en matériau textile, dans lequel a été formé un évidement dans une région apparente où le module est rendu visible.

Le module électronique est un module plat dont les dimensions sont légèrement supérieures à celles de l'évidement, et il est destiné à être monté à l'intérieur du vêtement dans la région de l'évidement. Ce module porte un afficheur visible depuis l'extérieur du vêtement au travers de l'évidement, de manière à présenter des indications, graphiques ou autres, apparentes sur le vêtement de la même manière que si elles avaient été imprimées sur celui-ci.

Le module étant fixé de l'intérieur, seul l'écran de l'afficheur est visible au travers de l'évidement, les régions périphériques de l'afficheur et le reste du module, ainsi que les moyens de fixation de celui-ci au vêtement, restant cachés côté intérieur du vêtement.

Le US 2010/0315367 A1 décrit une telle configuration, où le module électronique est disposé dans l'épaisseur du grand pan d'une cravate, avec au milieu une fenêtre laissant apparaitre l'afficheur. Le module et la cravate sont rendus solidaires par divers moyens appropriés, par exemple un système de fixation à aimant.

L'invention vise plus particulièrement la manière de fixer un module électronique à afficheur au vêtement auquel il est destiné, ce vêtement étant pourvu d'un évidement au travers duquel l'afficheur sera visible de l'extérieur.

On notera toutefois que, bien que l'invention soit principalement décrite dans le cadre de la fixation d'un module sur un vêtement, cette destination des moyens de fixation n'est pas limitative, l'invention s'appliquant aussi bien à la fixation d'un module à un autre objet support en nappe souple tel que sac, casquette, etc.

De la même façon, le support en nappe souple n'est pas nécessairement un support en matériau textile (tissu ou maille), mais peut être aussi un support de structure continue, par exemple un support en couche continue en matière synthétique, en cuir, etc.

Dans tous les cas, il convient de disposer d'un système qui permette de fixer aisément le module au support et, inversement, de l'en détacher sans difficulté et sans risque d'endommager le support.

Il est également indispensable que le système de fixation respecte la souplesse du support et du module, de manière à ne pas introduire de raideur additionnelle indésirable au niveau de cette fixation.

Dans le même ordre d'idée, afin d'optimiser l'intégration du module au vêtement, la surface active de l'afficheur doit affleurer le tissu du vêtement sur toute la périphérie de l'évidement, ce qui exclut des systèmes de fixation trop épais et discontinus tels que boutons-pression, etc. Cet affleurement doit, idéalement, être réalisé à moins de 1 mm près au niveau de la jonction vêtement/afficheur, et ceci de façon continue sur le pourtour de l'évidement.

De plus, dans le cas d'un vêtement, le module doit pouvoir être séparé du support à chaque fois que le vêtement est mis au lavage, puis remis en place sur le vêtement propre et repassé. Le système de fixation doit donc permettre ces manipulations de façon répétée et simple, et sans risque de dégradation au cours du temps ni du vêtement ni du moyen de fixation.

Il serait également souhaitable de pouvoir disposer d'un système de fixation assurant à la fois un auto-alignement (fixation immédiate à la bonne position, sans glissement) et un détrompage (fixation au support toujours dans le bon sens), sans que l'utilisateur n'ait à réfléchir ou à rechercher des repères de mise en place.

Une fixation de type bande agrippante permettrait de respecter la souplesse de l'ensemble module/vêtement et, compte tenu de son épaisseur, ne respecterait pas l'impératif de faible discontinuité à l'endroit où l'afficheur affleure le bord de l'évidement.

De plus, un usage répété d'une telle fixation risquerait d'endommager le vêtement par arrachement du tissu, notamment pour les tissus les plus fins. En outre, ce type de fixation est malaisé à utiliser si la bande agrippante s'étend sur toute la périphérie de l'évidement (ce qui est souhaitable pour éviter tout bâillement entre le module et le vêtement). De plus, elle ne procure aucun moyen simple de détrompage permettant de placer le module et donc l'afficheur dans le bon sens par rapport à l'évidement. L'invention propose un nouveau mode de fixation d'un module électronique flexible à un support en nappe souple qui résout l'ensemble de ces problèmes.

Plus précisément, l'invention propose à cet effet un ensemble comprenant, de manière en elle-même connue notamment d'après le US 2010/0315367 A1 précité : un support en nappe souple, notamment un support textile, comportant un évidement formé dans une région apparente ; un module électronique plat, dont le contour périphérique est homologue du contour de l'évidement et dont les dimensions sont supérieures à celles de l'évidement de manière à définir avec celui-ci une région périphérique chevauchante, ce module étant disposé d'un côté intérieur du support et comprenant un circuit supportant des composants électroniques et un afficheur visible depuis un côté extérieur du support au travers de l'évidement ; et des moyens magnétiques de solidarisation du module au support lorsque le module et le support sont disposés en vis-à-vis dans la région périphérique chevauchante.

De façon caractéristique de l'invention, le circuit supportant des composants électroniques et l'afficheur est un circuit flexible, et le support comprend, autour de l'évidement et à sa surface en vis-à-vis du panneau, une bande périphérique portant un premier motif de magnétisation avec des plages magnétisées alternativement avec une polarité magnétique donnée et avec une polarité magnétique inverse. Le module comporte à sa périphérie un cadre, de dimensions homologues de la bande périphérique du support, portant un second motif de magnétisation avec des plages magnétisées alternativement avec une polarité magnétique donnée et avec une polarité magnétique inverse. Le second motif de magnétisation est un motif inversé, conjugué du premier motif de magnétisation lorsque le module et le support sont disposés en vis-à-vis dans la région périphérique chevauchante.

Selon diverses caractéristiques subsidiaires avantageuses :
- l'évidement et la bande périphérique ont une forme de rectangle, et le support et le module portent, sur au moins deux côtés et/ou sur au moins deux sommets adjacents du rectangle, un motif de magnétisation comprenant, pour chacun de ces côtés ou sommets, au moins deux plages magnétisées, l'une avec ladite polarité magnétique donnée et l'autre avec ladite polarité magnétique inverse ;
- le support et le module portent des motifs de magnétisation respectifs non symétriques par rapport à un axe du rectangle ;
- les plages magnétisées du premier et du second motif de magnétisation comprennent chacune un réseau de Halbach avec une configuration de bandes aimantées successivement dans un sens et dans l'autre, produisant un champ magnétique anisotrope essentiellement dirigé du côté du contact entre support et module ;
- le support est un support tissé ou tricoté définissant au moins une direction prépondérante, et la direction des bandes aimantées des motifs de magnétisation forme un angle de 30° à 60° par rapport à ladite direction prépondérante ;
- la bande périphérique portant le premier motif de magnétisation est une bande magnétisée ou magnétisable, rapportée par transfert sur le support, ou bien une bande formée à partir d'une poudre magnétisable laminée dans l'épaisseur du support ;
- la magnétisation des premier et second motifs de magnétisation est une magnétisation à concentration contrôlée du flux magnétique apte à produire à distance courte ou nulle une attraction de deux plages magnétisées avec des polarités conjuguées, et une répulsion de ces mêmes plages au-delà d'une distance supérieure à un seuil donné.

On va maintenant décrire un exemple de mise en oeuvre de la présente invention, en référence aux dessins annexés où les mêmes références désignent d'une figure à l'autre des éléments identiques ou fonctionnellement semblables.
La Figure 1 est une vue générale d'un vêtement intégrant un module avec un afficheur visible sur le devant.
La Figure 2 est une vue de dessus en plan, selon II-II de la Figure 3, du module flexible considéré isolément.
La Figure 3 est une vue de côté en coupe éclatée, selon III-III de la Figure 2, du module flexible de la Figure 2.
La Figure 4 illustre les différentes pièces de tissu à assembler pour la réalisation du vêtement de la Figure 1.
La Figure 5 est une vue de côté, en éclaté, de l'ensemble formé par le vêtement, le module et les moyens selon l'invention de fixation du module au vêtement.
La Figure 6 illustre un exemple de réalisation des moyens de fixation permettant, grâce à des motifs de magnétisation appropriés, de réaliser les fonctions d'auto-alignement et de détrompage.
La Figure 7 illustre le principe d'un réseau de Halbach.
La Figure 8 illustre la manière dont le réseau de Halbach de la Figure 7 est positionné et orienté par rapport à l'évidement formé dans le vêtement.
La Figure 9 illustre un exemple de réalisation des moyens de fixation avec effet de verrouillage limité à faible distance entre surfaces en vis-à-vis.

On va maintenant décrire un exemple de réalisation de l'invention.

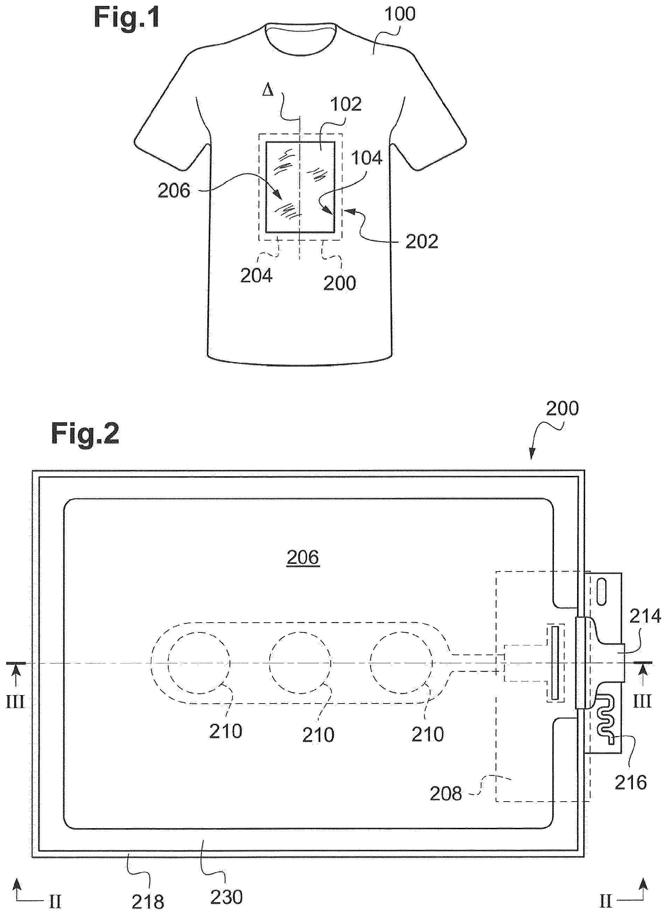

Sur la Figure 1, la référence 100 désigne de façon générale un vêtement tel qu'un tee-shirt, sur le devant duquel a été formé un évidement 102 pour réaliser une ouverture dans l'épaisseur de ce tee-shirt, ici une ouverture rectangulaire. Avantageusement, pour permettre une découpe nette et sans effilochage du bord 104, cet évidement est réalisé par une technique telle qu'une découpe laser, le vêtement étant dans ce cas réalisé en une matière synthétique telle que polyamide ou acrylique.

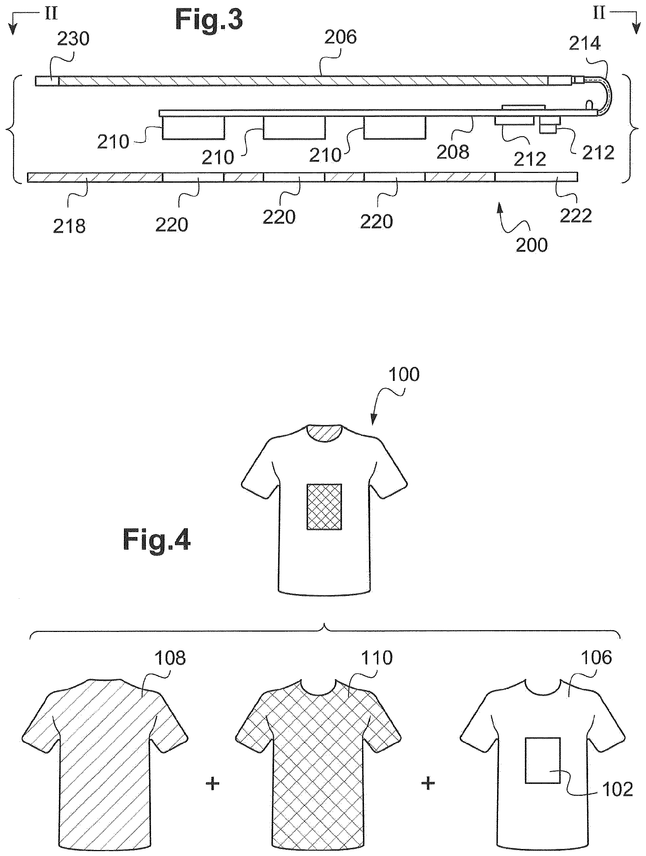

Un module électronique flexible 200 (décrit plus en détail, isolément, aux Figures 2 et 3) est monté à l'emplacement de cet évidement 102, côté intérieur du vêtement. Le bord périphérique externe 202 du module 200 présente une forme semblable à celle de l'évidement 102, avec des dimensions externes légèrement supérieures, de manière à ménager côté intérieur du vêtement, autour de l'évidement 102, une région périphérique chevauchante 204 de largeur sensiblement constante.

Le module électronique 200 peut notamment supporter un afficheur 206 visible de l'extérieur, au travers de l'évidement 102, cet afficheur présentant des dimensions identiques à celles de l'évidement 102 ou très légèrement supérieures de manière que seule la surface active de l'afficheur 206 soit visible au travers de l'évidement 102.

Cet afficheur 206 permet de faire apparaitre sur l'avant du vêtement, à volonté selon la programmation du module, des messages, logos, signes graphiques, etc., de la même manière que si ces indications avaient été imprimées sur l'avant du vêtement, surtout dans le cas d'un afficher de type EPD (*e-Paper Display*) dont les propriétés réflectives sont assez proches de celles d'un papier ou d'un tissu.

Les Figures 2 et 3 illustrent, respectivement en plan vu de dessus et en coupe éclatée, le module électronique 200.

Celui-ci comporte une carte PCB de circuit imprimé flexible 208 supportant des batteries 210 permettant de rendre le module autonome, ainsi que divers composants 212 tels que : microcontrôleur, contrôleur d'afficheur, mémoire flash, capteur de mouvement de type MEMS ou autres, circuit d'interfaçage radio de type Bluetooth basse énergie BLE, etc., permettant de réaliser toutes les fonctions électroniques du module 200.

La carte de circuit flexible 208 est reliée par un connecteur souple 214 à l'afficheur 206, le connecteur flexible pouvant également supporter une antenne RF telle qu'une antenne Bluetooth 216.

En ce qui concerne l'afficheur 206, celui-ci est constitué d'un écran flexible par exemple de type "e-Paper", qui est une technologie procurant à la fois une très faible épaisseur (de l'ordre de 0,8 mm), une très bonne souplesse qui permet de déformer l'écran sans risque d'endommagement, ainsi qu'une faible consommation, le maintien d'une image fixe ne requérant pas d'apport d'énergie.

Du côté opposé à l'afficheur 206, le module 200 comporte un dos en mousse 218 comprenant des évidements 220, 222 logeant les piles 210 et les composants 212.

Une fois ces différents éléments assemblés, on dispose d'un module électronique 200 présentant une flexibilité suffisante pour ne pas gêner l'utilisateur lorsque le module est monté sur le vêtement, de faible épaisseur (inférieure à 3 mm) et de faible poids : inférieur à 80 g, de préférence environ 50 g pour un module de dimensions typiques 125 x 160 mm supportant un afficheur 206 de 7 pouces (178 mm).

Le module comporte également, du côté de l'afficheur 206 et autour de celui-ci, un cadre périphérique magnétique 230 qui permettra la fixation du module 200 au vêtement de la manière que l'on décrira ci-après. Le cadre périphérique 230 est par exemple fixé autour de l'afficheur 206 par collage sur le dos en mousse 218 au moyen d'un adhésif approprié. Le cadre périphérique magnétique 230 présente une épaisseur du même ordre que celle de l'afficheur 206, de sorte que sa surface extérieure apparente, tournée vers la pièce de devant 106 du vêtement, vienne affleurer l'afficheur 206 et assure ainsi une continuité optimale, la moins perceptible possible, entre les différents éléments constitutifs.

La Figure 4 illustre les différentes pièces de tissu à assembler pour la réalisation du vêtement 100. Celui-ci est réalisé à partir d'un patron comprenant une pièce de devant 106 dans laquelle a été formé l'évidement 102, une pièce de dos 108, et une doublure avant 110 pour éviter le contact direct du module 200 avec la peau de l'utilisateur lorsque ce module est monté sur la pièce de devant 106. Ces différentes pièces sont réalisées à partir d'une matière en nappe textile, tissée ou tricotée, préparée d'une manière conventionnelle.

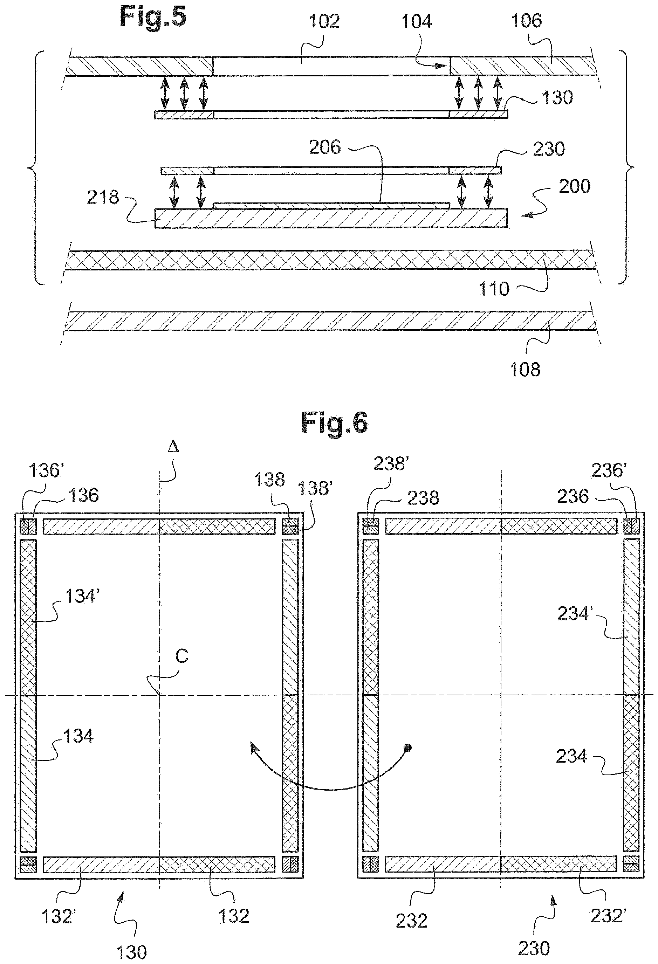

La Figure 5 illustre une vue en éclaté de l'ensemble formé par : le vêtement 100 de la Figure 4 avec ses différentes pièces 106, 108, 110 ; le module électronique 200 ; et les moyens magnétiques 130, 230 de fixation du module 200 au vêtement 100. Sur cette Figure 5, les proportions respectives entre les épaisseurs des différents éléments n'ont pas été respectées, ceci afin d'en améliorer la lisibilité.

Le module 200 est, comme on l'a indiqué, pourvu d'un cadre périphérique magnétique 230, portant, du côté tourné vers la face interne de la pièce de devant 106 du vêtement 100, un premier motif de magnétisation prédéterminé. Le vêtement 100 porte, pour sa part, sur la face interne de la pièce de devant 106, autour de l'évidement 102, une bande périphérique magnétique 130 portant un second motif de magnétisation, inverse du motif de magnétisation du cadre périphérique 230 du module 200.

La Figure 6 illustre des exemples de motifs de magnétisation respectivement formés sur la bande périphérique 130 du vêtement et sur le cadre périphérique 230 du module, ces motifs respectifs étant des motifs inversés, conjugués entre eux lorsque le module 200 et le vêtement 100 sont disposés en vis-à-vis avec le cadre magnétique 230 du module plaqué contre la bande périphérique magnétique 130 du vêtement. Par "inversion" du motif de magnétisation on entendra une inversion de polarité magnétique sud/nord. Par "motifs conjugués" on entendra le fait qu'un point du motif magnétique de l'un des éléments 130, 230 est magnétisé "sud" lorsque le point homologue de l'autre élément 230, 130 en vis-à-vis est magnétisé "nord", et *vice versa.* Cette configuration des motifs de magnétisation respectifs permet de réaliser une adhérence par attraction magnétique entre les deux éléments 130, 230 lorsque ceux-ci sont plaqués l'un contre l'autre.

Sur la Figure 6, les deux polarisations différentes sud/nord sont illustrées sous forme de hachurages respectivement simples et croisés, de façon à les distinguer.

Pour assurer la fonction d'auto-alignement et de détrompage, les motifs de magnétisation sont par exemple, comme illustré Figure 3, des motifs alternés 132, 132' avec 232, 232' et/ou 134, 134' avec 234, 234' sur des moitiés respectives de chacun des côtés de la forme rectangulaire de la bande périphérique 130 et du cadre périphérique 230.

Cette configuration permet en particulier d'assurer un auto-alignement des deux éléments 130 et 230 l'un par rapport à l'autre, le seul fait de les approcher provoquant un ajustement de leurs positions respectives et donc par le fait même un centrage du module 200, et donc de l'afficheur 206, par rapport à l'évidement 102.

Une fonction de détrompage peut être assurée par exemple en prévoyant dans des coins opposés des motifs magnétiques 136, 136' avec 236, 236', et/ou 138, 138' avec 238, 238' qui ne sont pas symétriques par rapport à l'axe Δ du rectangle, mais symétriques par rapport au centre C de ce même rectangle. Il s'agit par exemple de deux bandes nord/sud orientées à un sommet du rectangle dans le sens de la longueur, alors que sur le sommet adjacent elles sont orientées dans le sens de la largeur.

On va maintenant exposer diverses manières dont peut être réalisée la bande périphérique magnétique 130 du vêtement 100, celle-ci peut être réalisée de différentes façons.

Une *première technique* met en oeuvre un procédé de laminage. Dans ce contexte, c'est une pièce complète de tissu qui est laminée, pour être ensuite découpée (contour extérieur du patron et évidement 102) pour la réalisation finale du vêtement dans une étape ultérieure. Le laminage préalable produit un tissu dont une face présente la fibre du textile et dont la face opposée est magnétisable. Cette technique est utilisable notamment pour des tissus relativement épais, des matières telles que le cuir, etc.

Le laminage met en oeuvre une poudre comprenant des particules ferromagnétiques de haute coercivité, principalement constituées d'oxyde ferrique, mélangées à un liant tel qu'un polyéthylène chloré ou un polymère thermoplastique dans une proportion de l'ordre de 20 %, pour conférer la souplesse voulue au produit fini. Cette poudre est laminée avec le tissu, qui comprend une fibre synthétique (nylon, acrylique, etc.) et non étirable (pas d'élasthanne).

L'ensemble passe après laminage via un convoyeur au travers d'un poste de magnétisation produisant un champ magnétique fort conférant à la face ferrique ses propriétés magnétiques.

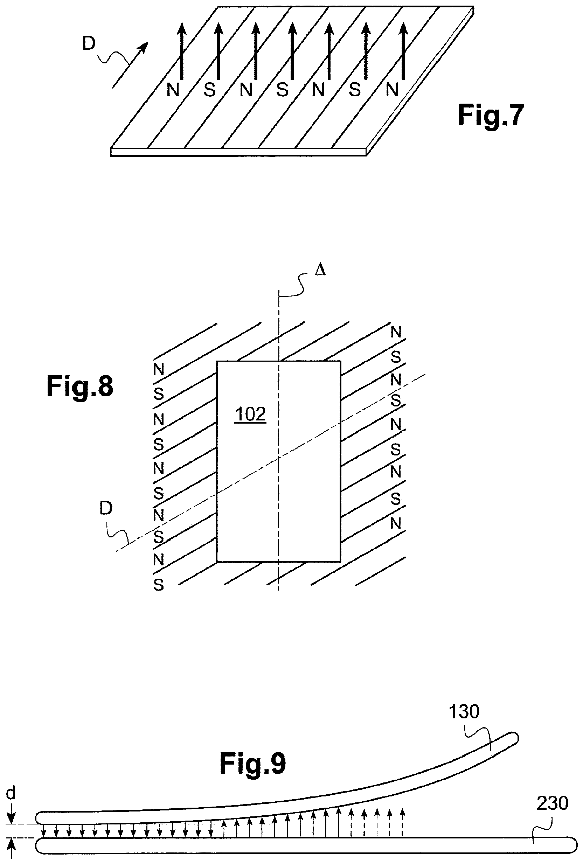

Avantageusement, comme illustré Figure 7, la magnétisation est réalisée de manière à produire un réseau de Halbach, qui se présente sous forme d'une alternance de bandes alternativement magnétisées nord et sud, la largeur des bandes étant de l'ordre de 5 à 6 mm. La face ferrique produit alors un champ magnétique directionnel et anisotrope, c'est-à-dire que le champ magnétique est concentré du côté de la face ferrique et pratiquement nul sur la face opposée du tissu.

Une fois cette magnétisation réalisée, la pièce de tissu est découpée et évidée, par exemple par découpe laser, les dimensions et la forme de l'évidement correspondant à celles de l'afficheur.

La Figure 8 illustre une technique permettant de pallier la fragilité relative du tissu laminé après réalisation du réseau de Halbach.

En effet, on constate que la surface laminée et magnétisée présente une fragilité dans la direction D (Figure 7) des bandes de magnétisation alternée, avec un risque d'amorce de déchirure à cet endroit, dans la direction des bandes.

Comme illustré Figure 8, pour pallier cet inconvénient l'évidement 102 est pratiqué en biais par rapport au réseau de Halbach, c'est-à-dire que la direction principale Δ de l'évidement est un angle par rapport à la direction D des bandes de magnétisation alternée. Cet angle est typiquement de 30° à 60°, de préférence environ 45°. Ce biais par rapport à la direction de trame ou de maille du tissu procure une robustesse notablement accrue, avec un risque bien moindre de cassure ou de fendillement de la couche ferrique magnétisée au dos du tissu.

Une *seconde technique* de réalisation de la bande périphérique magnétique 130 consiste à procéder par transfert d'une bande magnétique préalablement constituée, qui est ensuite rapportée au dos du tissu. Cette technique est utilisable de façon particulièrement avantageuse pour les tissus les plus minces et les plus souples.

La bande en forme de cadre doit être suffisamment fine (épaisseur typique de 0,25 mm à 0,50 mm) de façon que l'ensemble garde sa souplesse sans trop en augmenter l'épaisseur (moins de 1 mm au total) du fait de l'adjonction de la bande magnétique.

Si le tissu ainsi que la bande magnétique comportent chacun au moins 15 % de fibre thermoplastique, les deux éléments peuvent être réunis par des techniques de soudage par ultrasons. Dans le cas contraire, le report de la bande magnétique sur le tissu se fera en intercalant entre ces deux éléments une colle thermofusible qui se mélangera à la fibre du tissu au moment du passage sous une presse chauffante.

Comme dans le cas précédent, il est avantageux de réaliser la bande magnétique avec magnétisation selon un réseau de Halbach, et dont les lignes de force du réseau présentent un biais par rapport aux axes de la bande périphérique.

La Figure 9 illustre un perfectionnement qu'il est possible de mettre en oeuvre en complément des diverses techniques exposées ci-dessus.

Ce perfectionnement vise à pallier un inconvénient tenant au fait que, s'il est avantageux d'avoir un champ magnétique suffisamment puissant pour assurer une bonne tenue du module au vêtement, un champ trop élevé risque d'endommager voire déchirer le tissu du vêtement au moment du retrait, pour peu que ce tissu soit fragile.

Pour réduire ce risque, au moment de la magnétisation des éléments 130, 230 on prévoit de mettre en oeuvre une technique de concentration contrôlée du flux magnétique dans l'épaisseur de la couche magnétisable telle que celle décrite dans le US 8 937 521 A. Ce type de magnétisation procure, comme illustré Figure 9, un effet particulier de verrouillage permettant aux deux surfaces en vis-à-vis d'adhérer fortement à une courte distance programmable d (de l'ordre de 3 mm), mais de se repousser dès que l'intervalle qui les sépare est supérieur à cette même distance. En d'autres termes, la distance d correspond à une inversion entre les phénomènes d'attraction et de répulsion, ce qui permet de séparer plus facilement le module et le vêtement, sans appliquer à ce dernier trop de contraintes qui pourraient à la longue produire un déchirement.

## Revendications

1. Un ensemble, notamment un vêtement, comprenant :
- un support en nappe souple (100), notamment un support textile, comportant un évidement (102) formé dans une région apparente ;
- un module électronique plat (200), dont le contour périphérique (202) est homologue du contour de l'évidement (102), et dont les dimensions sont supérieures à celles de l'évidement de manière à définir avec celui-ci une région périphérique chevauchante (204), ce module étant disposé d'un côté intérieur du support et comprenant un circuit (208) supportant des composants électroniques (212) et un afficheur (206) visible depuis un côté extérieur du support au travers de l'évidement ; et
- des moyens magnétiques de solidarisation du module au support lorsque le module et le support sont disposés en vis-à-vis dans la région périphérique chevauchante,
**caractérisé en ce que** :
- le circuit (208) supportant des composants électroniques (212) et l'afficheur (206) est un circuit flexible ;
- le support (100) comprend, autour de l'évidement et à sa surface en vis-à-vis du panneau, une bande périphérique (130) portant un premier motif de magnétisation avec des plages magnétisées (132, 134, 136, 138) alternativement avec une polarité magnétique donnée et avec une polarité magnétique inverse ; et
- le module (200) comporte à sa périphérie un cadre (230), de dimensions homologues de la bande périphérique du support, portant un second motif de magnétisation avec des plages magnétisées (232, 234, 236, 238) alternativement avec une polarité magnétique donnée et avec une polarité magnétique inverse,
le second motif de magnétisation étant un motif inversé, conjugué du premier motif de magnétisation lorsque le module et le support sont disposés en vis-à-vis dans la région périphérique chevauchante.

2. L'ensemble de la revendication 1, dans lequel l'évidement et la bande périphérique ont une forme de rectangle, et dans lequel le support et le module portent, sur au moins deux côtés du rectangle, un motif de magnétisation comprenant, pour chacun de ces côtés, au moins deux plages magnétisées (132, 134 ; 232, 234), l'une avec ladite polarité magnétique donnée et l'autre avec ladite polarité magnétique inverse.

3. L'ensemble de la revendication 1, dans lequel l'évidement et la bande périphérique ont une forme de rectangle, et dans lequel le support et le module portent, sur au moins deux sommets adjacents du rectangle, un motif de magnétisation comprenant, pour chacun de ces sommets, au moins deux plages magnétisées (136, 138 ; 236, 238), l'une avec ladite polarité magnétique donnée et l'autre avec ladite polarité magnétique inverse.

4. L'ensemble de la revendication 2 ou 3, dans lequel le support et le module portent des motifs de magnétisation respectifs non symétriques par rapport à un axe (Δ) du rectangle.

5. L'ensemble de la revendication 1, dans lequel les plages magnétisées du premier et du second motif de magnétisation comprennent chacune un réseau de Halbach avec une configuration de bandes aimantées successivement dans un sens et dans l'autre, produisant un champ magnétique anisotrope essentiellement dirigé du côté du contact entre support et module.

6. L'ensemble de la revendication 5, dans lequel le support est un support tissé ou tricoté définissant au moins une direction prépondérante (Δ), et dans lequel la direction (D) des bandes aimantées des motifs de magnétisation forme un angle de 30° à 60° par rapport à ladite direction prépondérante (Δ).

7. L'ensemble de la revendication 1, dans lequel la bande périphérique portant le premier motif de magnétisation est une bande magnétisée ou magnétisable (130), rapportée par transfert sur le support.

8. L'ensemble de la revendication 1, dans lequel la bande périphérique portant le premier motif de magnétisation est une bande formée à partir d'une poudre magnétisable laminée dans l'épaisseur du support.

9. L'ensemble de la revendication 1, dans lequel la magnétisation des premier et second motif de magnétisation est une magnétisation à concentration contrôlée du flux magnétique apte à produire à distance courte ou nulle une attraction de deux plages magnétisées avec des polarités conjuguées, et une répulsion de ces mêmes plages au-delà d'une distance supérieure à un seuil donné (*d*).

## Patentansprüche

1. Anordnung, insbesondere eine Kleidung, umfassend:
- einen Träger aus einer flexiblen Schicht (100), insbesondere einen textilen Träger, mit einer Ausnehmung (102), die in einem sichtbaren Bereich gebildet ist;
- ein flaches elektronisches Modul (200), dessen Umfangskontur (202) der Kontur der Ausnehmung (102) entspricht und dessen Abmessungen größer sind als die der Ausnehmung, so dass mit dieser ein überlappender Umfangsbereich (204) definiert wird, wobei dieses Modul auf einer Innenseite des Trägers angeordnet ist und eine Schaltung (208) umfasst, die elektronische Bauteile (212) und ein Anzeigeelement (206) trägt, das von einer Außenseite des Trägers durch die Ausnehmung hindurch sichtbar ist; und
- magnetische Mittel für die feste Verbindung des Moduls mit dem Träger, wenn das Modul und der Träger in dem überlappenden Umfangsbereich einander gegenüber angeordnet sind,
**dadurch gekennzeichnet, dass**
- die Schaltung (208), die elektronische Bauteile (212) und das Anzeigeelement (206) trägt, eine flexible Schaltung ist;
- der Träger (100), um die Ausnehmung herum und an seiner Oberfläche der Platte gegenüber, ein Umfangsband (130) umfasst, das ein erstes Magnetisierungsmuster mit magnetisierten Bereichen (132, 134, 136, 138) abwechselnd mit einer bestimmten magnetischen Polarität und mit einer umgekehrten magnetischen Polarität trägt; und
- das Modul (200) an seinem Umfang einen Rahmen (230) mit dem Umfangsband des Trägers entsprechenden Maßen aufweist, das ein zweites Magnetisierungsmuster mit magnetisierten Bereichen (232, 234, 236, 238) abwechselnd mit einer bestimmten magnetischen Polarität und mit einer umgekehrten magnetischen Polarität trägt,
wobei das zweite Magnetisierungsmuster ein umgekehrtes Muster ist, das mit dem ersten Magnetisierungsmuster konjugiert ist, wenn das Modul und der Träger in dem überlappenden Umfangsbereich einander gegenüber angeordnet.

2. Anordnung nach Anspruch 1, wobei die Ausnehmung und das Umfangsband eine rechteckige Form haben und wobei der Träger und das Modul, auf mindestens zwei Seiten des Rechtecks, ein Magnetisierungsmuster tragen, das, für jede dieser Seiten, mindestens zwei magnetisierte Bereiche (132, 134; 232, 234) umfasst, der eine mit der bestimmten magnetischen Polarität und der andere mit der umgekehrten magnetischen Polarität.

3. Anordnung nach Anspruch 1, wobei die Ausnehmung und das Umfangsband eine rechteckige Form haben und wobei der Träger und das Modul, auf mindestens zwei benachbarten Spitzen des Rechtecks, ein Magnetisierungsmuster tragen, das, für jede dieser Spitzen, mindestens zwei magnetisierte Bereiche (136, 138; 236, 238) umfasst, der eine mit der bestimmten magnetischen Polarität und der andere mit der umgekehrten magnetischen Polarität.

4. Anordnung nach Anspruch 2 oder 3, wobei der Träger und das Modul jeweilige Magnetisierungsmuster tragen, die gegenüber einer Achse (Δ) des Rechtecks nicht symmetrisch sind.

5. Anordnung nach Anspruch 1, wobei die magnetisierten Bereiche des ersten und des zweiten Magnetisierungsmusters jeder ein Halbach-Netz umfassen mit einer Ausgestaltung aus Bändern, die in der einen Richtung und in der anderen aufeinander folgend magnetisiert sind und ein anisotropes Magnetfeld erzeugen, das im Wesentlichen zur Seite des Kontakts zwischen Träger und Modul gerichtet ist.

6. Anordnung nach Anspruch 5, wobei der Träger ein gewebter oder gewirkter Träger ist, der mindestens eine vorherrschende Richtung (Δ) definiert und wobei die Richtung (D) der magnetisierten Bänder der Magnetisierungsmuster einen Winkel von 30° bis 60° gegenüber der vorherrschenden Richtung (Δ) bildet.

7. Anordnung nach Anspruch 1, wobei das Umfangsband, welches das erste Magnetisierungsmuster trägt, ein magnetisiertes oder magnetisierbares Band (130) ist, das durch Transfer auf den Träger aufgebracht ist.

8. Anordnung nach Anspruch 1, wobei das Umfangsband, welches das erste Magnetisierungsmuster trägt, ein Band ist, das aus einem magnetisierbaren Pulver gebildet ist, das in der Dicke des Trägers gewalzt ist.

9. Anordnung nach Anspruch 1, wobei die Magnetisierung des ersten und zweiten Magnetisierungsmusters eine Magnetisierung mit kontrollierter Konzentration des Magnetflusses ist, der in der Lage ist, bei kurzem Abstand oder bei einem Abstand gleich null eine Anziehung von zwei magnetisierten Bereichen mit konjugierten Polaritäten und über einen Abstand hinaus, der größer als ein bestimmter Schwellwert (d) ist, eine Abstoßung dieser gleichen Bereiche zu erzeugen.

## Claims

1. A unit, in particular a garment, comprising:
- a supple layer support (100), in particular a textile support, including an opening (102) formed in a visible region;
- a flat electronic module (200), whose peripheral contour (202) is homologous to the contour of the opening (102), and whose size is larger than that of the opening so as to define with the latter an overlapping peripheral region (204), said module being placed on an inner side of the support and comprising a circuit (208) supporting electronic components (212) and a display (206) visible from an outer side of the support through the opening; and
- magnetic means for fastening the module to the support when the module and the support are placed opposite to each other in the overlapping peripheral region,
**characterized in that**:
- the circuit (208) supporting electronic components (212) and the display (206) is a flexible circuit;
- the support (100) comprises, around the opening and at the surface thereof opposite the panel, a peripheral band (130) carrying a first magnetization pattern with areas (132, 134, 136, 138) alternately magnetized with a given magnetic polarity and with a reverse magnetic polarity; and
- the module (200) includes at the periphery thereof a frame (230), having a size homologous to that of the peripheral band of the support, carrying a second magnetization pattern with areas (232, 234, 236, 238) alternately magnetized with a given magnetic polarity and with a reverse magnetic polarity,
the second magnetization pattern being a reverse pattern, mating with the first magnetization pattern when the module and the support are placed opposite to each other in the overlapping peripheral region.

2. The unit of claim 1, wherein the opening and the peripheral band have a rectangular shape, and wherein the support and the module carry, on at least two sides of the rectangle, a magnetization pattern comprising, for each of these sides, at least two magnetized areas (132, 134; 232, 234), one of which with said given magnetic polarity and the other with said reverse magnetic polarity.

3. The unit of claim 1, wherein the opening and the peripheral band have a rectangular shape, and wherein the support and the module carry, on at least two adjacent corners of the rectangle, a magnetization pattern comprising, for each of these corners, at least two magnetized areas (136, 138; 236, 238), one of which with said given magnetic polarity and the other with said reverse magnetic polarity.

4. The unit of claim 2 or 3, wherein the opening and the module carry respective magnetization patterns which are non-symmetrical with respect to an axis (Δ) of the rectangle.

5. The unit of claim 1, wherein the magnetized areas of the first and the second magnetization pattern each comprise a Halbach array, with a configuration of bands successively magnetized in one direction and in the other, providing an anisotropic magnetic field essentially directed towards the side where support and module contact.

6. The unit of claim 5, wherein the support is a woven or knitted support defining at least one predominant direction (Δ), and wherein the direction (D) of the magnetized bands of the magnetization patterns forms an angle of 30° to 60° with respect to said predominant direction.

7. The unit of claim 1, wherein the peripheral band carrying the first magnetization band is a magnetized or magnetisable band (130), added by transfer to the support.

8. The unit of claim 1, wherein the peripheral band carrying the first magnetization pattern is a band formed of a magnetisable powder laminated in the thickness of the support.

9. The unit of claim 1, wherein the magnetization of the first and second magnetization patterns is a magnetization with controlled concentration of the magnetic flow adapted to provide over a short or null distance an attraction of two areas magnetized with mating polarities, and a repulsion of these latter areas beyond a distance greater than a given threshold (*d*).
